# EUROPEAN PATENT APPLICATION

(11) **EP 4 589 034 A1**
(43) Date of publication of application: **23.07.2025**
(21) Application number: 24863853.8
(22) Date of filing: 14.05.2024
(51) Int. Cl.: C22B 3/00, C22B 3/08, C22B 3/22

(54) **METHOD FOR RECOVERY OF NICKEL FROM NICKEL MATTE IN SULFIDE FORM**

(30) Priority: 30.11.2023 KR 20230170846
(71) Applicant: Korea Zinc Co., Ltd., Seoul 06110 (KR); Kemco, Seoul 06110 (KR)
(72) Inventor: CHOI, Heon Sik, Ulsan 44696 (KR); PARK, Sung Won, Ulsan 45003 (KR); LEE, Je Joong, Seoul 06041 (KR)
(74) Representative: Angerhausen, Christoph
(86) International application number: PCT/KR2024/006516
(87) International publication number: WO 2025/116150

(57) **Abstract**

Disclosed in an embodiment of the present invention is a method for recovering nickel from nickel matte in sulfide form, the method comprising: an atmospheric leaching process of leaching the nickel matte in sulfide form at atmospheric pressure; and a pressurized leaching process of leaching an atmospheric leach residue of the nickel matte obtained from the atmospheric leaching process at a pressure higher than the atmospheric pressure, wherein a pressurized leached liquid of the nickel matte, obtained from the pressurized leaching process, has an acid concentration ranging from 10 g/L to 40 g/L.

## Description

### TECHNICAL FIELD

The present disclosure relates to a method for recovering nickel from nickel matte. More specifically, the present disclosure pertains to a method for recovering nickel from nickel matte in sulfide form, whereby iron (Fe) contained within the nickel matte may be precipitated and removed.

### BACKGROUND

To recover nickel from nickel matte, a process involving the leaching of the nickel matte in an acidic solution under atmospheric pressure conditions is employed. In the case of atmospheric leaching, the reaction time must be prolonged (for example, more than 16 hours) to increase the leaching efficiency of nickel components. Consequently, the conventional process results in low production efficiency and increased consumption of gas or steam, as well as increased costs due to the input of oxidizing agents such as hydrogen peroxide (H₂O₂). Furthermore, in an atmospheric leaching processes, the majority of iron (Fe) components other than nickel are also leached, necessitating additional processes for the removal of iron.

### SUMMARY

The present disclosure aims to provide a method for recovering nickel from nickel matte in sulfide form, which shortens leaching time with the consequent improvement of production efficiency, and eliminates the need for additional processes for iron removal by precipitating iron during a leaching process.

An embodiment of the present disclosure discloses a method for recovering nickel from nickel matte in sulfide form, the method comprising: an atmospheric leaching process of leaching the nickel matte in sulfide form at atmospheric pressure; and a pressurized leaching process of leaching an atmospheric leach residue of the nickel matte obtained from the atmospheric pressure leaching process at a pressure higher than the atmospheric pressure, wherein a pressurized leached liquid of the nickel matte, obtained from the pressurized leaching process, has an acid concentration ranging from 10 g/L to 40 g/L.

In one embodiment, the pressurized leached liquid may be introduced into the atmospheric leaching process.

In one embodiment, the atmospheric leaching process may be performed at a pH of 2.5 to 5.0, where iron components may precipitate in the atmospheric leaching process.

In one embodiment, the pressurized leached liquid of the nickel matte, obtained from the pressurized leaching process, may have an acid concentration range from 10 g/L to 30 g/L.

In one embodiment, nickel matte in sulfide form may be additionally introduced during the pressurized leaching process.

In one embodiment, oxygen gas and an sulfuric acid solution may be introduced during the pressurized leaching process.

In one embodiment, the sulfuric acid solution introduced during the pressurized leaching process may have a concentration range from 110 g/L to 140 g/L.

In one embodiment, the sulfuric acid solution introduced during the pressurized leaching process may have a concentration range from 110 g/L to 130 g/L.

In one embodiment, iron components may precipitate in a form of hematite during the pressurized leaching process.

In one embodiment, the method may further comprise, subsequent to the pressurized leaching process:

a repulping process of agitating a pressurized leach residue of the nickel matte, obtained from the pressurized leaching process, together with water; and a purification process of purifying an atmospheric leached liquid of the nickel matte, obtained from the atmospheric leaching process, to recover nickel components, wherein a repulped liquid of the nickel matte, formed during the repulping process, is introduced into the pressurized leaching process.

According to the present disclosure, the production efficiency is increased by shortening the leaching time through a pressurized leaching process that leaches nickel matte at a pressure higher than atmospheric pressure.

Additionally, the present disclosure reduces the cost of acid input for leaching as acid is generated during the leaching process.

Furthermore, the present disclosure increases the leaching efficiency of nickel by adjusting the acid concentration of the pressurized leached liquid of the nickel matte, which was obtained from the pressurized leaching process.

Moreover, by precipitating and removing impurities such as iron components simultaneously with nickel leaching, the present disclosure eliminates the need for additional processes for iron removal.

### BRIEF DESCRIPTION OF THE DRAWINGS

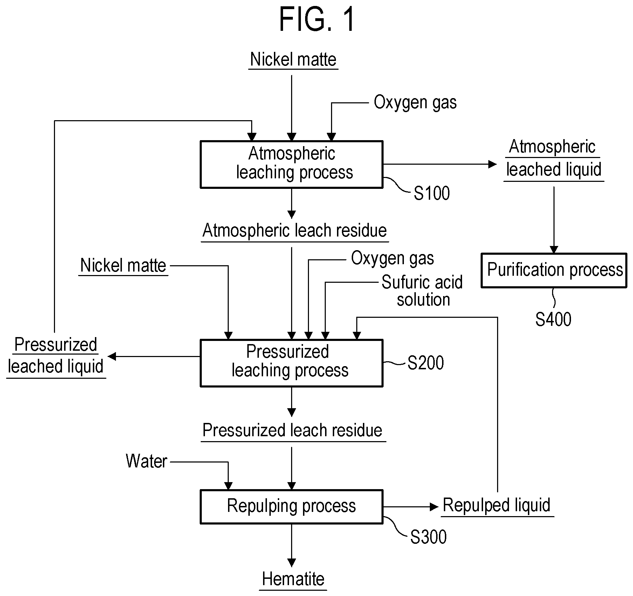

FIG. 1 is a flowchart illustrating the method for recovering nickel from nickel matte in sulfide form according to an embodiment of the present disclosure.

### DETAILED DESCRIPTION

Embodiments of the present disclosure are illustrated for the purpose of explaining the technical idea of the present disclosure. The scope of the rights according to the present disclosure is not limited to the embodiments presented below or the detailed descriptions of such embodiments.

FIG. 1 is a flowchart illustrating a method for recovering nickel from nickel matte in sulfide form according to an embodiment of the present disclosure.

Referring to FIG. 1, the method for recovering nickel from nickel matte in sulfide form may include an atmospheric leaching process (S 100), a pressurized leaching process (S200), a repulping process (S300), and a purification process (S400).

Nickel matte is an intermediate product made by refining oxidized and sulfidized ores. Nickel matte may contain at least nickel, cobalt, copper, and iron. In one embodiment, the nickel matte may contain more than 70% nickel content. The nickel content may be higher than the content of other elements in the nickel matte. The nickel component may be included in sulfide form in the nickel matte. For example, the nickel component may be included in the form of Ni₃S₂ in the nickel matte.

The nickel matte may be in a ground state. In one embodiment, the method for recovering nickel from nickel matte in sulfide form may include a raw material grinding process before the atmospheric leaching process (S100). In the raw material grinding process, the nickel matte raw material may be ground.

### Atmospheric Leaching Process (S100)

In the atmospheric leaching process (S100), nickel matte is leached at atmospheric pressure. Oxygen gas (O₂ gas) may be introduced during the atmospheric leaching process (S100). In the atmospheric leaching process (S100), nickel matte may be leached into an atmospheric leached liquid of nickel matte. The remainder of the nickel matte, excluding the atmospheric leached liquid of nickel matte, is the atmospheric leach residue of the nickel matte.

The atmospheric pressure may be the pressure of the atmosphere. For example, the atmospheric pressure may be 0.1 MPa or 1.0 bar. Nickel matte may be introduced in the atmospheric leaching process (S100). Additionally, as will be discussed later, a pressurized leached liquid of the nickel matte, obtained from the pressurized leaching process (S200), may be introduced into the atmospheric leaching process (S100).

The atmospheric leaching process (S100) may proceed in the temperature range of 80°C to 95°C. Preferably, the atmospheric leaching process (S100) may proceed in the temperature range of 85°C to 95°C. For example, the atmospheric leaching process (S100) may proceed at 90°C. If the atmospheric leaching process (S100) proceeds below 80°C, the leaching efficiency may decrease, resulting in a reduced nickel recovery rate. When the atmospheric leaching process (S100) proceeds at higher than 95°C, water may evaporate, necessitating the input of industrial water due to the decrease in liquid volume, thereby increasing the process cost.

The atmospheric leaching process (S100) may proceed within a range of 1 hour to 4 hours. For example, the atmospheric leaching process (S100) may proceed for 3 hours. If the atmospheric leaching process (S100) proceeds for less than 1 hour, the precipitation efficiency of the iron component may decrease. If the atmospheric leaching process (S100) proceeds for more than 4 hours, the process cost and the unit cost of the operation process may increase.

The atmospheric leaching process (S100) may be conducted at a pH of 2.5 to 5.0. In the atmospheric leaching process (S100), the introduction of nickel matte into the pressurized leached liquid of nickel matte may neutralize the remaining acid in the pressurized leached liquid of nickel matte.

The iron component may precipitate in the atmospheric leaching process (S100). In the atmospheric leaching process (S 100), the iron component may precipitate in the form of goethite (FeO(OH)). In one embodiment, the atmospheric leaching process (S100) may be conducted at a pH of 2.5 to 5.0 to allow the iron content to precipitate. Since nickel matte is introduced into the pressurized leached liquid of nickel matte in the atmospheric leaching process (S 100), the remaining acid in the pressurized leached liquid may be neutralized. Therefore, the iron component may precipitate in the atmospheric leaching process (S100). If the pH level in the atmospheric leaching process (S100) is greater than 5.0, precipitation of nickel and cobalt components may occur. Preferably, the atmospheric leaching process (S100) may be conducted at a pH of 2.5 to 4.0.

### Pressurized Leaching Process (S200)

A pressurized leaching process (S200) allows for the leaching of atmospheric leach residue of nickel matte obtained from the atmospheric leaching process (S100). Sulfide-form nickel matte may also be additionally introduced in the pressurized leaching process (S200). The atmospheric leach residue of nickel matte, along with the nickel matte, may be introduced in the pressurized leaching process (S200). Therefore, both the atmospheric leach residue and the nickel matte may be leached in the pressurized leaching process (S200). Nickel matte or the atmospheric leach residue of nickel matte may be leached into the pressurized leached liquid of nickel matte in the pressurized leaching process (S200). The remainder, excluding the pressurized leached liquid of the nickel matte or of the atmospheric leach residue of nickel matte, may be the pressurized leach residue of nickel matte.

The pressurized leaching process (S200) may proceed at a pressure higher than atmospheric pressure. In one embodiment, the pressurized leaching process (S200) may proceed at a pressure in the range of 0.8 MPa to 1 MPa. For example, the pressurized leaching process (S200) may proceed at a pressure of 0.9 MPa. If the pressurized leaching process (S200) proceeds at a pressure lower than 0.8 MPa, the amount of oxygen gas introduced may decrease, potentially reducing the precipitation rate of iron. If the pressurized leaching process (S200) proceeds at a pressure higher than 1 MPa, operational risks associated with increased pressure may arise, and the cost of the process may increase.

The pressurized leaching process (S200) may be carried out in a pressurized device, such as an autoclave facility. The pressurized device may include an agitator.

The pressurized leaching process (S200) may be conducted at temperatures above 150°C. If the pressurized leaching process (S200) proceeds below 150°C, the leaching rate of nickel components may decrease, reducing the recovery rate of nickel components.

The pressurized leaching process (S200) may proceed for a time period in a range of 5 to 10 hours. For example, the pressurized leaching process (S200) may proceed for 7 hours. If the pressurized leaching process (S200) proceeds for less than 5 hours, the recovery rate of nickel components may decrease. If the pressurized leaching process (S200) proceeds for longer than 10 hours, the process cost may increase, making the process unsuitable for operations.

The solid density of nickel matte in the pressurized leaching process (S200) may be 130 g/L to 180 g/L. For example, the solid density of nickel matte may be 150 g/L. The solid density in the pressurized leaching process (S200) refers to the mass of atmospheric leach residue and newly introduced nickel matte relative to the volume of liquid in the pressurized device where the pressurized leaching process (S200) is taking place. If the solid density of nickel matte is less than 130 g/L, the volume of liquid and thus the size of the equipment may increase. If the solid density of nickel matte exceeds 200 g/L, the agitator in the pressurized device may not operate smoothly.

Oxygen gas (O₂ gas) and acidic solution may be introduced in the pressurized leaching process (S200). In one embodiment, oxygen gas and sulfuric acid solution may be introduced in the pressurized leaching process (S200). Oxygen gas may be used as an oxidizing agent. Acid may be generated in the pressurized leaching process (S200). The acid generated in the pressurized leaching process (S200) may be used in the pressurized leaching process (S200), and the pressurized leached liquid may also be introduced into the atmospheric leaching process (S100), reducing the cost of acid introduction. The reaction formula for nickel leaching from the material may be represented by [Reaction Formula 1] to [Reaction Formula 4].

[Reaction Formula 1] Ni₃S₂ + H₂SO₄ +0.5O₂ → NiSO₄ + 2NiS + H₂O

[Reaction Formula 2] 4NiS + H₂SO₄ + 0.5O₂ → NiSO₄ + Ni₃S₄ + H₂O

[Reaction Formula 3] NiS + 2O₂ → NiSO₄

[Reaction Formula 4] Ni₃S₄ + H₂O + 7.5O₂ → 3NiSO₄ + H₂SO₄

According to [Reaction Formula 1], nickel components may be leached from nickel matte or the atmospheric leach residue of nickel matte. During this process, approximately 50% to 60% of the nickel components in the nickel matte or the atmospheric leach residue of the nickel matte may be leached.

NiS, formed by [Reaction Formula 1], is stable at atmospheric pressure. Therefore, if NiS reacts with sulfuric acid solution at atmospheric pressure, the nickel components might not be leached. In an embodiment of the present disclosure, in the pressurized leaching process (S200) at high pressure, NiS may react with oxygen gas and sulfuric acid solution according to [Reaction Formulas 2] to [Reaction Formula 4], allowing the nickel components to be leached. Thus, the leaching rate of nickel components may be further increased because the nickel components in NiS are also leached.

In the pressurized leaching process (S200), iron components may precipitate in the form of hematite (Fe₂O₃). Specifically, oxygen gas introduction during pressurized leaching may allow iron components to be leached in the form of Fe²⁺, which are then oxidized to Fe³⁺ by the introduced oxygen gas. The reactions may be represented by [Reaction Formula 5] and [Reaction Formula 6].

[Reaction Formula 5] FeS + H₂SO₄ +0.5O₂ → FeSO₄ + H₂O + S

[Reaction Formula 6] 2Fe²⁺ + 2H⁺ + 1/2o₂ → 2Fe³⁺ + H₂O

Subsequently, the iron components leached in the form of Fe³⁺ may precipitate as hematite according to [Reaction Formula 7].

[Reaction Formula 7] Fe₂(SO₄)₃ + 4H₂O → Fe₂O₃ + 3H₂SO₄ + H₂O

In an embodiment, the concentration of sulfuric acid solution introduced in the pressurized leaching process (S200) may be up to 140 g/L. At a sulfuric acid concentration of 140 g/L or lower, most of the nickel components may be leached. If the concentration of sulfuric acid exceeds 140 g/L, the leaching efficiency of nickel components may decrease. This could be because NiS does not react under strong acidic conditions (for example, when the concentration of sulfuric acid exceeds 140 g/L). Therefore, the leaching efficiency of nickel components may decrease. Additionally, if the concentration of sulfuric acid exceeds 140 g/L, iron components may not precipitate and instead may be leached.

In an embodiment, the concentration of the sulfuric acid solution introduced in the pressurized leaching process (S200) may be up to 130 g/L. At a sulfuric acid concentration lower than 130 g/L, most of the iron components may precipitate.

In an embodiment, the concentration of the sulfuric acid solution introduced in the pressurized leaching process (S200) may be at least 110 g/L. If the concentration of sulfuric acid in the pressurized leaching process (S200) is lower than 110 g/L, the leaching rate of nickel components may unsuitably decrease.

In an embodiment, the concentration of the sulfuric acid solution introduced in the pressurized leaching process (S200) may range from 110 g/L to 140 g/L. Preferably, the concentration of sulfuric acid introduced in the pressurized leaching process (S200) may range from 110 g/L to 130 g/L.

Adjusting the concentration of the acidic solution introduced (e.g., the concentration of the sulfuric acid solution) may control the acidity concentration of the pressurized leached liquid. In an embodiment, the acidity concentration of the pressurized leached liquid of the nickel matte obtained from the pressurized leaching process (S200) may be up to 40 g/L. The acidity concentration of the pressurized leached liquid may refer to the concentration of sulfuric acid contained in the pressurized leached liquid. If the acidity concentration of the pressurized leached liquid is up to 40 g/L, most of the nickel components may be leached. For example, more than 99% of the nickel components in the nickel matte may be leached. If the acidity concentration of the pressurized leached liquid exceeds 40 g/L, the leaching rate of nickel components may decrease.

In an embodiment, the acidity concentration of the pressurized leached liquid of the nickel matte obtained from the pressurized leaching process (S200) may be up to 30 g/L. If the acidity concentration of the pressurized leached liquid is up to 30 g/L, the precipitation rate of iron components may significantly increase. For example, more than 85% of the iron components in the nickel matte may precipitate.

In an embodiment, the acidity concentration of the pressurized leached liquid of the nickel matte obtained from the pressurized leaching process (S200) may be at least 10 g/L. If the acidity concentration of the pressurized leached liquid is lower than 10 g/L, the nickel leaching efficiency may decrease.

In an embodiment, the acidity concentration of the pressurized leached liquid of the nickel matte obtained from the pressurized leaching process (S200) may range from 10 g/L to 40 g/L. Preferably, the acidity concentration of the pressurized leached liquid of the nickel matte obtained from the pressurized leaching process (S200) may range from 10 g/L to 30 g/L.

The pressurized leached liquid of the nickel matte may be introduced into the atmospheric leaching process (S100). By introducing nickel matte into the pressurized leached liquid of the nickel matte in the atmospheric leaching process (S 100), the remaining acid in the pressurized leached liquid of the nickel matte may be neutralized.

### Repulping Process (S300)

In the repulping process (S300), the pressurized leach residue of the nickel matte, obtained from the pressurized leaching process (S200), may be agitated together with water. The repulping process (S300) may be a process to recover water-soluble nickel components remaining in the pressurized leach residue. Without conducting the repulping process (S300), there may be a loss in the recovery of nickel components.

The repulping process (S300) may be conducted at 60°C. In an embodiment, the water introduced in the repulping process (S300) may have a temperature of 60°C.

The repulping process (S300) may be conducted for a time period within a range of 1 hour to 2 hours. For example, the repulping process (S300) may proceed for 1 hour. If the repulping process (S300) proceeds for less than 1 hour, it may be difficult to completely dissolve all nickel components. If the repulping process (S300) proceeds for more than 2 hours, the process cost may increase.

In the repulping process (S300), the ratio of liquid to solid may satisfy the range of 130 g/L to 180 g/L. For example, the ratio of liquid to solid in the repulping process (S300) may be 150 g/L. If the ratio of liquid to solid in the repulping process (S300) is higher than 200 g/L, the liquid may not be agitated smoothly in the repulping process (S300).

The repulping process (S300) may form a repulped liquid of the nickel matte. The repulped liquid of the nickel matte may contain nickel components. The repulped liquid of the nickel matte may be introduced into the pressurized leaching process (S200). In order to recover nickel components from the nickel matte, thus, the atmospheric leaching process (S100), the pressurized leaching process (S200), and the repulping process (S300) may be conducted in a cycle, which allows the recovery of nickel components to continue.

The remainder of the pressurized leach residue of the nickel matte after the repulping process (S300), excluding the repulped liquid of the nickel matte, may be the final residue of the nickel matte. In an embodiment, the final residue of the nickel matte may include hematite

### Purification Process (S400)

In the purification process (S400), the atmospheric leached liquid of the nickel matte may be purified. In the purification process (S400), atmospheric leached liquid of the nickel matte may be purified, allowing the recovery of nickel components.

The method for recovering nickel from sulfide-form nickel matte according to an embodiment of the present disclosure may include a pressurized leaching process (S200) that leaches nickel matte under pressure, thereby shortening the process time. Hence, production efficiency may be increased. Additionally, acid may be generated during the pressurized leaching process (S200), reducing the cost of acid input. Also, by controlling the concentration of the introduced acidic solution, and maintaining the acid concentration of the pressurized leached liquid at or below 40 g/L, the efficiency of nickel leaching may be increased, and impurities such as iron may be precipitated simultaneously with the leaching of nickel components. Particularly, by adjusting the concentration of the introduced acidic solution to maintain the acid concentration of the pressurized leached liquid at or below 30 g/L during leaching, impurities such as iron may be precipitated at a rate of 85% or more. Therefore, additional processes for the removal of iron components may be omitted.

### EXAMPLES

The material used was nickel matte containing 73.4% nickel (Ni), 0.49% cobalt (Co), 0.18% copper (Cu), and 3.61% iron (Fe), with the percentage composition by mass. The components of the nickel matte raw material are presented in Table 1 below.

**TABLE 1**

| | Nickel (Ni) | Cobalt (Co) | Copper (Cu) | Iron (Fe) |
|---|---|---|---|---|
| Content (%) | 73.4 | 0.49 | 0.18 | 3.61 |

The leaching process utilized the method for recovering nickel from sulfide-form nickel matte according to the described embodiments of the present disclosure. The solid density of the input material was set at 150 g/L. The atmospheric leaching process (S100) was conducted at a temperature of 90°C and a pH of 3.5 for 3 hours. The pressurized leaching process (S200) was conducted at a temperature of 150°C and a pressure of 0.9 MPa for 7 hours. The repulping process (S300) was conducted at a temperature of 60°C for 1 hour, with a solid to liquid ratio of 150 g/L.

### EXAMPLES 1 TO 4

In Examples 1 to 4, the final nickel leaching efficiency and the iron precipitation rate from the method for recovering nickel from sulfide-form nickel matte according to the embodiments of the present disclosure were compared by adjusting the concentration conditions of sulfuric acid in the pressurized leached liquid. In Example 1, the initial concentration of sulfuric acid was set to 110 g/L and the sulfuric acid concentration in the pressurized leached liquid was adjusted to 10 g/L. In Example 2, the initial concentration of sulfuric acid was set to 120 g/L and the sulfuric acid concentration in the pressurized leached liquid was adjusted to 20 g/L. In Example 3, the initial concentration of sulfuric acid was set to 130 g/L and the sulfuric acid concentration in the pressurized leached liquid was adjusted to 30 g/L. In Example 4, the initial concentration of sulfuric acid was set to 140 g/L and the sulfuric acid concentration in the pressurized leached liquid was adjusted to 40 g/L.

### COMPARATIVE EXAMPLES 1 TO 3

In Comparative Examples 1 to 3, the condition of sulfuric acid concentration in the pressurized leached liquid was adjusted to compare the final nickel leaching efficiency and iron precipitation rate. In Comparative Example 1, the initial concentration of sulfuric acid was set to 180 g/L, and the sulfuric acid concentration in the pressurized leached liquid was adjusted to 80 g/L. In Comparative Example 2, the initial concentration of sulfuric acid was set to 190 g/L, and the sulfuric acid concentration in the pressurized leached liquid was adjusted to 90 g/L. In Comparative Example 3, the initial concentration of sulfuric acid was set to 200 g/L, and the sulfuric acid concentration in the pressurized leached liquid was adjusted to 100 g/L. Other experimental conditions were the same as those of the Examples.

**TABLE 2**

| | Initial Sulfuric acid Concentration (g/L) | Sulfuric acid Concentration in Pressurized leached liquid (g/L) | Leaching rate of Nickel Component (%) | Precipitation rate of Iron Component (%) |
|---|---|---|---|---|
| Ex. 1 | 110 | 10 | 99.8 | 93.4 |
| Ex. 2 | 120 | 20 | 99.9 | 90.4 |
| Ex. 3 | 130 | 30 | 99.9 | 89.3 |
| Ex. 4 | 140 | 40 | 99.9 | 30.1 |
| C. Ex. 1 | 180 | 80 | 61.4 | 4.20 |
| C. Ex. 2 | 190 | 90 | 60.8 | 2.18 |
| C. Ex. 3 | 200 | 100 | 61.2 | 2.11 |

As shown in Table 2, when the initial concentration of sulfuric acid was adjusted to ensure the sulfuric acid concentration in the pressurized leached liquid was between 10 g/L and 40 g/L, the nickel leaching rate was over 99%. Furthermore, when the initial concentration of sulfuric acid was adjusted to ensure the sulfuric acid concentration in the pressurized leached liquid was between 10 g/L and 30 g/L, about 85% or more of the iron component precipitated. In contrast, when the initial concentration of sulfuric acid was adjusted to increase the sulfuric acid concentration in the pressurized leached liquid to 80 g/L or more, the nickel leaching rate decreased to about 60%, and most of the iron component did not precipitate.

The technical idea of the present disclosure has been described heretofore with reference to some embodiments and examples shown in the accompanying drawings. However, it is to be understood that various substitutions, modifications and alterations may be made without departing from the technical idea and scope of the present disclosure that can be understood by those of ordinary skill in the technical field to which the present disclosure pertains. Further, it is to be understood that such substitutions, modifications and alterations fall within the appended claims.

## Claims

1. A method for recovering nickel from nickel matte in sulfide form, the method comprising:
an atmospheric leaching process of leaching the nickel matte in sulfide form at atmospheric pressure; and
a pressurized leaching process of leaching an atmospheric leach residue of the nickel matte obtained from the atmospheric leaching process at a pressure higher than the atmospheric pressure,
wherein a pressurized leached liquid of the nickel matte, obtained from the pressurized leaching process, has an acid concentration ranging from 10 g/L to 40 g/L.

2. The method of claim 1, wherein the pressurized leached liquid is introduced into the atmospheric leaching process.

3. The method of claim 1, wherein the atmospheric leaching process is performed at a pH of 2.5 to 5.0, and iron components precipitate in the atmospheric leaching process.

4. The method of claim 1, wherein the pressurized leached liquid of the nickel matte, obtained from the pressurized leaching process, has an acid concentration range from 10 g/L to 30 g/L.

5. The method of claim 1, wherein the nickel matte in sulfide form is additionally introduced during the pressurized leaching process.

6. The method of claim 1, wherein oxygen gas and sulfuric acid solution are introduced during the pressurized leaching process.

7. The method of claim 6, wherein the sulfuric acid solution introduced during the pressurized leaching process has a concentration range from 110 g/L to 140 g/L.

8. The method of claim 7, wherein the sulfuric acid solution introduced during the pressurized leaching process has a concentration range from 110 g/L to 130 g/L.

9. The method of claim 1, wherein iron components precipitate in a form of hematite during the pressurized leaching process.

10. The method of claim 1, further comprising, subsequent to the pressurized leaching process:
a repulping process of agitating a pressurized leach residue of the nickel matte, obtained from the pressurized leaching process, together with water; and
a purification process of purifying an atmospheric leached liquid of the nickel matte, obtained from the atmospheric leaching process, to recover nickel components,
wherein a repulped liquid of the nickel matte, formed during the repulping process, is introduced into the pressurized leaching process.
